(19) **Europäisches Patentamt / European Patent Office / Office européen des brevets**

(11) **EP 3 798 048 A1**

(12) # EUROPEAN PATENT APPLICATION
published in accordance with Art. 153(4) EPC

(43) Date of publication:
**31.03.2021 Bulletin 2021/13**

(21) Application number: **19872875.0**

(22) Date of filing: **18.10.2019**

(51) Int Cl.:
**B60N 2/02** (2006.01)

(86) International application number:
**PCT/CN2019/111928**

(87) International publication number:
**WO 2020/078461 (23.04.2020 Gazette 2020/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.10.2018 CN 201811224906**

(71) Applicant: **Shanghai Sensetime Intelligent Technology Co., Ltd.**
**Shanghai 200233 (CN)**

(72) Inventors:
• **YI, Chengming**
  **Shanghai 200233 (CN)**
• **LIANG, Guanhua**
  **Shanghai 200233 (CN)**
• **WEI, Yang**
  **Shanghai 200233 (CN)**

(74) Representative: **Lavoix**
**Bayerstraße 83**
**80335 München (DE)**

(54) **METHOD AND DEVICE FOR INTELLIGENT ADJUSTMENT OF VEHICLE SEAT, AND VEHICLE, ELECTRONIC DEVICE, AND MEDIUM**

(57)     A method and device for the intelligent adjustment of a vehicle seat, and a vehicle, an electronic device, and a medium. The method comprises: analyzing an image of a vehicle occupant to obtain an analysis result; determining body-type related information and/or face height information of the occupant according to the analysis result; determining seat adjustment information in respect of the occupant on the basis of the body-type related information and/or the face height information; and outputting the adjustment information, or adjusting the seat on the basis of the adjustment information. A seat adjusted on the basis of seat adjustment information provides for a more suitable sitting posture for the vehicle occupant, and thereby increases occupant comfort.

```
┌─────────────────────────────────────────────────┐
│  Detect an image of a riding person of a vehicle, │──110
│  to obtain a detection result                      │
└─────────────────────────────────────────────────┘
                        │
                        ▼
┌─────────────────────────────────────────────────┐
│  Determine body type related information and/or    │──120
│  face height information of the riding person      │
│  according to the detection result                 │
└─────────────────────────────────────────────────┘
                        │
                        ▼
┌─────────────────────────────────────────────────┐
│  Determine adjustment information of a seat of the │──130
│  riding person based on the body type related      │
│  information and/or the face height information    │
└─────────────────────────────────────────────────┘
                        │
                        ▼
┌─────────────────────────────────────────────────┐
│  Output the adjustment information or adjust the    │──140
│  seat based on the adjustment information          │
└─────────────────────────────────────────────────┘
```

**FIG. 1**

**Description**

The present application claims priority to Chinese Patent Application No. 201811224906.6, filed with the Chinese Patent Office on October 19, 2018, and entitled "METHOD AND DEVICE FOR INTELLIGENT ADJUSTMENT OF VEHICLE SEAT, AND VEHICLE, ELECTRONIC DEVICE, AND MEDIUM", the content of which is hereby incorporated by reference in its entirety.

**TECHNICAL FIELD**

The present application relates to an intelligent driving technology, in particular, to a method and an apparatus for intelligent adjustment of a vehicle seat, a vehicle, an electronic device, and a medium.

**BACKGROUND**

Nowadays vehicle owners often feel discomforts in each part of the body after long time driving, such as dizzy head bilges, shoulder and neck aches, lumbar acerbity backaches and inflexible leg, and other phenomena. Actually such phenomena all relate to our gestures while driving at ordinary times; we know that correct sitting postures may enable a driver and a passenger to ease harms up to the hilt, and therefore, forming a good driving habit is quite necessary.

First thing for the driver before driving is normally adjusting a seat after getting in a vehicle, where height, front and back distances, and back rest inclined angle are included; this is also related to the distance between the legs and the brake, accelerator, clutch, etc. at the same time; it is preferable to feel comfortable and have strong operability as a whole; a proper seat position may ensure the correct sitting posture of the driver to ease harm.

**SUMMARY**

Embodiments of the present application provide technical solutions for intelligent vehicle seat adjustment.

A method for intelligent adjustment of a vehicle seat provided according to one aspect of the embodiments of the present application includes:

    detecting an image of a riding person of a vehicle, to obtain a detection result;
    determining body type related information and/or face height information of the riding person according to the detection result;
    determining adjustment information of a seat of the riding person based on the body type related information and/or the face height information; and
    outputting the adjustment information, or adjusting the seat based on the adjustment information.

An apparatus for intelligent adjustment of a vehicle seat provided according to another aspect of the embodiments of the present application includes:

    a person detection unit, configured to detect an image of a riding person of a vehicle, to obtain a detection result;
    a related information determining unit, configured to determine body type related information and/or face height information of the riding person according to the detection result;
    an adjustment information determining unit, configured to determine adjustment information of a seat of the riding person based on the body type related information and/or the face height information; and
    an information processing unit, configured to output the adjustment information, or adjust the seat based on the adjustment information.

According to another aspect of the embodiments of the present application, a vehicle provided includes the apparatus for intelligent adjustment of a vehicle seat according to any one of the foregoing embodiments.

An electronic device provided according to further another aspect of the embodiments of the present application includes a processor, where the processor includes the an apparatus for intelligent adjustment of a vehicle seat according to any one of the foregoing embodiments.

An electronic device provided according to yet another aspect of the embodiments of the present application includes: a memory, configured to store executable instructions; and

a processor, configured to communicate with the memory to execute the executable instructions so as to complete the method for intelligent adjustment of a vehicle seat according to any one of the above items.

A computer readable storage medium provided according to another aspect of the embodiments of the present application is configured to store computer readable instructions, where the instructions, when being executed, enable to implement the operations of the method for intelligent adjustment of a vehicle seat according to any one of the foregoing embodiments.

A computer program product provided according to another aspect of the embodiments of the present application includes computer readable codes, where the computer readable codes, when running in a device, enable the processor in the device to execute the instructions for implementing the method for intelligent adjustment of a vehicle seat according to any one of the foregoing embodiments.

A method and an apparatus for intelligent adjustment of a vehicle seat, a vehicle, an electronic device, and a medium provided based on the aforementioned embodiments of the present application, where the method includes: detecting an image of a riding person of a vehicle, to obtain a detection result; determining body type related information and/or face height information of the riding person according to the detection result; determining adjustment information of a seat of the riding person based on the body type related information and/or the face height information; and outputting the adjustment information, or adjusting the seat based on the adjustment information. The embodiments of the present application may implement targeted intelligent adjustment on the seat sit by the riding person of the vehicle based on an image detection technology, that is, the body type related information and/or face height information of the riding person are obtained by image detection, based on the body type related information and/or face height information, the adjustment information of the seat can be determined more accurately, a more suitable sitting posture is provided for the riding person by the seat adjusted according to the adjustment information of the seat, and the use comfortable degree of the riding person is improved.

The technical solutions of the present application are further described in detail with reference to the accompanying drawings and embodiments as follows.

## BRIEF DESCRIPTION OF THE DRAWINGS

The accompanying drawings constituting a part of the specification describe embodiments of the present application and are intended to explain the principles of the present application together with the descriptions.

According to the following detailed descriptions, the present application can be understood more clearly with reference to the accompanying drawings.

FIG. 1 is a schematic flowchart of a method for intelligent adjustment of a vehicle seat provided by the embodiments of the present application.

FIG. 2 is another schematic flowchart of a method for intelligent adjustment of a vehicle seat provided by the embodiments of the present application.

FIG. 3 is a position reference diagram of a vehicle coordinate system and a camera coordinate system.

FIG. 4 is a schematic result diagram of a camera coordinate system space point translating to the vehicle coordinate system.

FIG. 5 is a schematic diagram of simplified seat adjustment camera coordinate system and vehicle coordinate system.

FIG. 6 is a schematic diagram of rotating a coordinate point $(x_1, z_1)$ into a coordinate point $(x_0, z_0)$ in the vehicle coordinate system.

FIG. 7 is another schematic flowchart of a method for intelligent adjustment of a vehicle seat provided by the embodiments of the present application.

FIG. 8 is a further partial schematic flowchart of a method for intelligent adjustment of a vehicle seat provided by the embodiments of the present application.

FIG. 9 is another partial schematic flowchart of a method for intelligent adjustment of a vehicle seat provided by the embodiments of the present application.

FIG. 10 is a schematic structure diagram of an apparatus for intelligent adjustment of a vehicle seat provided by the embodiments of the present application.

FIG. 11 is a schematic structural diagram of an electronic device suitable for implementing a terminal device or a server according to embodiments of the present application

## DETAILED DESCRIPTION

Various exemplary embodiments of the present application are now described in detail with reference to the accompanying drawings. It should be noted that, unless otherwise stated specifically, relative arrangement of the components and steps, numerical expressions, and values set forth in the embodiments are not intended to limit the scope of the present application.

In addition, it should be understood that, for ease of description, the size of each part shown in the accompanying drawings is not drawn in actual proportion.

The following descriptions of at least one exemplary embodiment are merely illustrative actually, and are not intended to limit the present application and applications or uses thereof.

Technologies, methods and devices known to a person of ordinary skill in the related art may not be discussed in detail, but such technologies, methods and devices should be considered as a part of the specification in appropriate situations.

It should be noted that similar reference numerals and letters in the following accompanying drawings represent similar items. Therefore, once an item is defined in an accompanying drawing, the item does not need to be further discussed in the subsequent accompanying drawings.

The embodiments of the present application may be applied to a computer system/server, which may operate with numerous other general-purpose or special-purpose computing system environments or configurations. Examples of well-known computing systems, environments, and/or configurations suitable for use together with the computer systems/servers include, but are not limited to, vehicle mounted devices, personal computer systems, server computer systems, thin clients, thick clients, handheld or laptop devices, microprocessor-based systems, set top boxes, programmable consumer electronics, network personal computers, small computer systems, large computer systems, distributed cloud computing environments that include any one of the foregoing systems, and the like.

The computer system/server may be described in the general context of computer system executable instructions (for example, program modules) executed by the computer system. Generally, the program modules may include routines, programs, target programs, components, logics, data structures, and the like for performing specific tasks or implementing specific abstract data types. The computer system/server may be practiced in the distributed cloud computing environments in which tasks are performed by remote processing devices that are linked through a communications network. In the distributed computing environments, the program modules may be located in local or remote computing system storage mediums including storage devices.

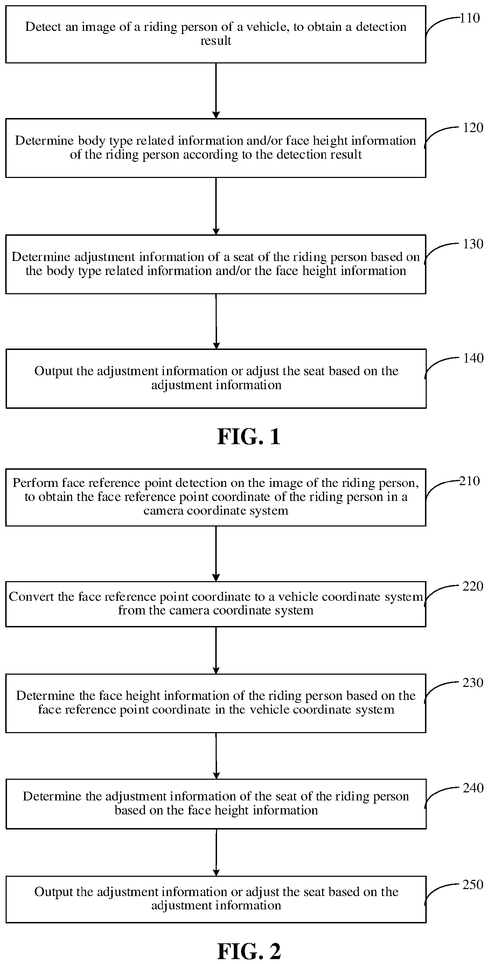

FIG. 1 is a schematic flowchart of a method for intelligent adjustment of a vehicle seat provided by the embodiments of the present application. The method can be executed by any electronic device, such as a vehicle mounted device, a terminal device, a server, and a mobile device; the embodiments of the present application do not limit it. As shown in FIG. 1, the method of the embodiments includes the following steps.

At step 110, an image of a riding person of a vehicle is detected, to obtain a detection result.

In the embodiments of the present application, the riding person may include a driver and/or a passenger; an image of the riding person entering the vehicle is collected to implement the detection using the collected image of the riding person; detection may be implemented based on a neural network or by other means; the embodiments of the present application do not limit the specific means for detecting the image of the riding person. Optionally, the neural networks in the embodiments of the present application may respectively be a multi-layer neural network (i.e., a deep neural network), and the neural network therein may be a multi-layer convolutional neural network, for example, any neural network model such as LeNet, AlexNet, GoogLeNet, VGG, and ResNet. Neural networks of the same type and/or structure, or neural networks of different types and structures may be used for the various neural networks. The embodiments of the present application do not limit same.

In an optional example, the step 110 may be performed by a processor by invoking a corresponding instruction stored in a memory, or may be performed by a person detection unit 101 run by the processor.

At step 120, body type related information and/or face height information of the riding person are determined according to the detection result.

Optionally, determining the body type related information of the riding person and determining the face height information of the riding person normally correspond to different detection results, i.e., detecting the riding person may relate to detection based on one or more neural networks, respectively, to obtain the detection results corresponding to the body type related information and/or face height information; the body type related information may include, but not limited to, the race, gender, or other information affecting information related to the riding person during riding the vehicle (for example, weight status degree, leg length information, skeleton size information, hand length information, etc.). For example, the face reference point is detected based on a key point detection network and the obtained face reference point is used for determining the face height information; attribute detection is performed on the image of the riding person based on the neural network for attribute detection to determine the body type related information, or the body type related information of the riding person can be determined according to the body or face detection result, or the body type related information is obtained through direct detection by a classification neural network, for example, by using the gender recognized by face recognition, the skeleton size information of the riding person can be obtained; a female skeleton is normally small while a male skeleton is normally large.

Determining the body type related information and/or face height information by using the detection result may directly use the detection result as the body type related information and/or face height information, and may further process the detection result and then obtain the body type related information and/or face height information.

In one optional example, step 120 may be performed by a processor by invoking a corresponding instruction stored in a memory, and may also be performed by a related information determination unit 102 run by the processor.

At step 130, adjustment information of a seat of the passenger is determined based on the body type related information and/or the face height information.

The comfortable sitting posture of a body is not only related to the sitting posture height but also related to the body type. To provide more comfortable seat adjustment position, in the embodiments of the present application, the adjustment information of the seat is determined by obtaining the body type related information and/or face height information of the driver.

In one optional example, step 130 may be performed by a processor by invoking a corresponding instruction stored in a memory, and may also be performed by an adjustment information determination unit 103 run by the processor.

At step 140, the adjustment information is output or the seat is adjusted based on the adjustment information.

Optionally, the adjustment information of the seat may be relevant information between the seat expectation state corresponding to the riding person and the current state of the current seat; the current state of the seat may be a vehicle factory leaving position and may also be any other position (for example, the seat state set by the preceding driver, etc.); the current state of the seat can be known according to a seat setting history; the adjustment information of the seat can be obtained according to the current state of the seat; or the adjustment information of the seat may also by the seat expectation state corresponding to the riding person; the seat expectation state corresponding to the target value of each adjustment parameter adjusted by the riding person at last, where the adjustment parameter may include, but not limited to at least one of: up and down positions of the seat, left and right positions of the seat, front and back positions of the seat, an inclined angle of the back-rest chair, an inclined angle of a cushion, etc.

In one optional example, step 140 may be performed by a processor by invoking a corresponding instruction stored in a memory, and may also be performed by an information processing unit 103 run by the processor.

A method and an apparatus for intelligent adjustment of a vehicle seat, a vehicle, an electronic device, and a medium provided based on the aforementioned embodiments of the present application, where the method includes: detecting an image of a riding person of a vehicle, to obtain a detection result; determining body type related information and/or face height information of the riding person according to the detection result; determining adjustment information of a seat of the riding person based on the body type related information and/or the face height information; and outputting the adjustment information, or adjusting the seat based on the adjustment information. Based on the image detection technology, the embodiments of the present application may implement the personalized intelligent adjustment of the seat sit by the riding person of the vehicle; that is, the body type related information and/or face height information of the riding person are obtained through image detection, based on the body type related information and/or face height information, the adjustment information of the seat can be determined more accurately, a more suitable sitting posture is provided for the riding person by the seat adjusted according to the adjustment information of the seat, the use comfortable degree of the riding person is improved, and the intelligent adjustment targeted at the seat is achieved.

FIG. 2 is another schematic flowchart of a method for intelligent adjustment of a vehicle seat provided by the embodiments of the present application. As shown in FIG. 2, in the embodiments, the detection result includes the face reference point coordinate; the method of the embodiments includes the following steps.

At step 210, face reference point detection is performed on the image of the riding person, to obtain the face reference point coordinate of the riding person in a camera coordinate system.

Optionally, the face reference point may be any point on a face, may be a face key point and may also be other position points on the face. During the vehicle driving process, a view of the riding person plays an important role; for the driver, ensuring the height of both eyes of the driver during driving may improve security of driving; therefore, the face reference point may be set as the point related to the eyes, for example, determining at least one key point of the two eye positions, or an eyebrow center position point, etc.; the embodiments of the present application do not limit the specific number and position of the face reference points, and are subjected to being capable of determining the face height.

In some optional examples, the face reference point includes at least one face key point and/or at least one face other position point; step 210 includes: face reference point detection is performed on the image of the riding person to obtain the at least one face key point coordinate of the riding person in the camera coordinate system; and/or
the at least one face other position point is determined based on the at least one face key point coordinate.

Optionally, the position of the face key point can be determined by using the neural network, for example, one or more of 21 key points of the face, 106 key points of the face, and 240 key points of the face; the number of the key points obtained by using a different network is different; key points of the five sense organs may be included; or the key point of a face profile may also be included; the density of the key points is different, rendering different numbers of the obtained key points; using one or more of the obtained key points as the face reference points only requires to select different parts according to conditions, and the embodiments of the present application do not limit the position and number of the face key points.

Optionally, the reference point may also be the face other position points on the face image determined based on the detection result of the face key point; the face other position points may not be key points, i.e., any position points on the face, but the position thereof may be determined by the face key point, for example, the eyebrow center position may be determined by the key points of the two eyes and the key points of the eyebrows.

At step 220, the face reference point coordinate is converted to a vehicle coordinate system from the camera coordinate system.

Optionally, the face reference point is obtained by using the image collected by the camera; the face reference point corresponds to the camera coordinate system, and while determining the seat information, determination is required to be determined in the vehicle coordinate system, and therefore, the face reference point is required to be converted from the camera coordinate system to the vehicle coordinate system.

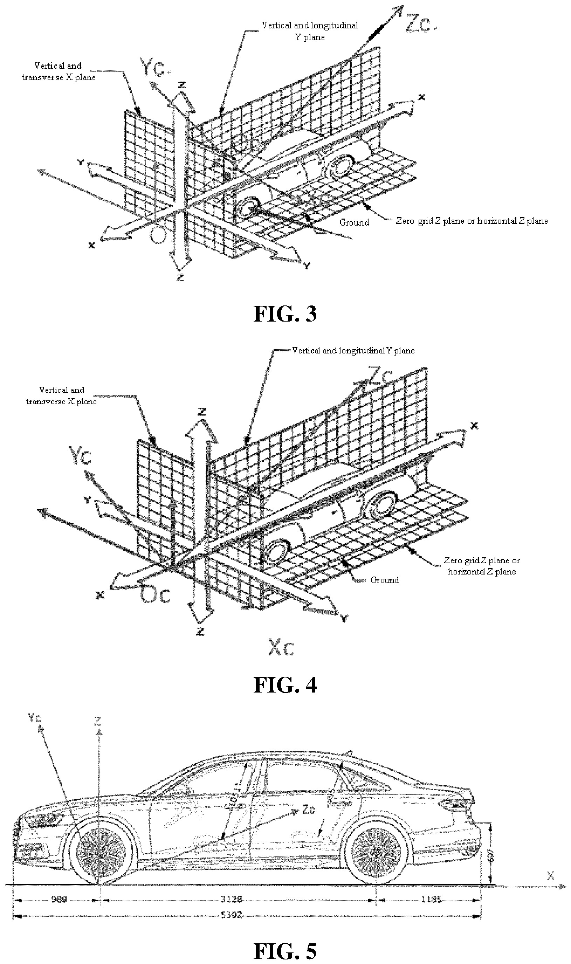

In an optional example, the common coordinate system conversion mode in the prior art can be used for converting the eyebrow center position coordinate from the camera coordinate system to the vehicle coordinate system, for example, FIG. 3 is a position reference diagram of the vehicle coordinate system and the camera coordinate system, where in the vehicle coordinate system, a y axis is a front wheel axis, an x axis is parallel to a left upper edge, and a z axis is vertical to the ground downwards. FIG. 4 is a schematic result diagram of a camera coordinate system space point translating to the vehicle coordinate system. As shown in FIG. 4, the origin point Oc of the camera coordinate system is translated to the origin point O of the vehicle coordinate system. It is known that Oc is (Xwc, Ywc, Zwc) in the vehicle coordinate system and the Oc is (0, 0 ,0) in the camera coordinate system; points translated to the origin point O (0, 0, 0) in the vehicle coordinate system are:

$$= 0 - \mathrm{Xwc} \qquad \text{Formula (1)}$$

$$0 = 0 - \mathrm{Ywc} \qquad \text{Formula (2)}$$

$$0 = 0 - \mathrm{Zwc} \qquad \text{Formula (3)}$$

a translation vector T obtained from formulas (1), (2), and (3) is:

$$[\mathrm{Xwc} \quad \mathrm{Ywc} \quad \mathrm{Zwc}] \qquad \text{Formula (4)}$$

to complete the coordinate system translation conversion.

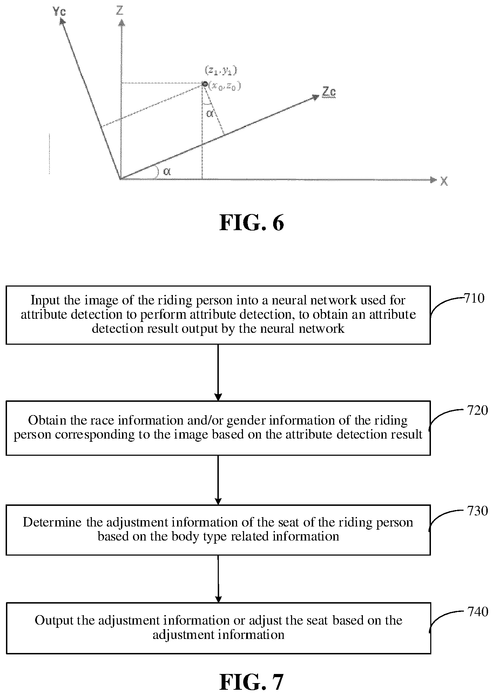

FIG. 5 is a schematic diagram of simplified seat adjustment camera coordinate system and vehicle coordinate system. As shown in FIG. 5, in an actual seat adjustment process, the X axis in the vehicle coordinate system is not adjusted, and the conversion of the coordinate point in the camera coordinate system to the vehicle coordinate system is simplified as a rotational operation in a two-dimensional coordinate system. FIG. 6 is a schematic diagram of rotating a coordinate point $(x_1, z_1)$ into a coordinate point $(x_0, z_0)$ in the vehicle coordinate system. As shown in FIG. 6, assuming that a head coordinate point of the driver in the camera coordinate system is detected as $(y_1, z_1)$, after a rotational angle $\alpha$, i.e., a mounting angle of a camera, the coordinate point $(x_0, z_0)$ in the vehicle coordinate system is obtained.

According to FIG. 5, the conversion process provided by a schematic diagram of conversion of the coordinate points in two coordinate systems is as follows:

$$x_0 = -y_1 sin\alpha + z_1 cos\alpha \qquad \text{Formula (5)}$$

$$z_0 = y_1 cos\alpha + z_1 sin\alpha \qquad \text{Formula (6)}$$

$$y_0 = -x_1 \qquad \text{Formula (7)}$$

as can be known from formulas (5), (6), and (7) that:

$$\begin{bmatrix} x_0 \\ y_0 \\ z_0 \end{bmatrix} = \begin{bmatrix} 0 & -sin\alpha & cos\alpha \\ 1 & 0 & 0 \\ 0 & cos\alpha & sin\alpha \end{bmatrix} * \begin{bmatrix} x_1 \\ y_1 \\ z_1 \end{bmatrix} = R_Y * \begin{bmatrix} x_1 \\ y_1 \\ z_1 \end{bmatrix} \qquad \text{Formula (8)}$$

as can be known from formulas (4) and (8) that the coordinate in the vehicle coordinate system rotated and translated from the final coordinate point in the camera coordinate system is:

$$\begin{bmatrix} x_0 \\ y_0 \\ z_0 \end{bmatrix} = R_Y * \begin{bmatrix} x_1 \\ y_1 \\ z_1 \end{bmatrix} + T \qquad \text{Formula (9).}$$

At step 230, the face height information of the riding person is determined based on the face reference point coordinate in the vehicle coordinate system.

Through coordinate system conversion, the face height information of the riding person in the vehicle can be determined, i.e., the relative position relation between the face height and the seat can be determined, and the expected seat state information corresponding to the face height information can be obtained.

At step 240, the adjustment information of the seat of the riding person is determined based on the face height information.

At step 250, the adjustment information is output or the seat is adjusted based on the adjustment information.

In the embodiments of the present application, the seat adjustment information is determined according to the face height information for providing personalized seat adjustment information for different riding persons, which is more suitable for personal requirements of the riding persons and improves the comfortable degree for riding.

FIG. 7 is another schematic flowchart of a method for intelligent adjustment of a vehicle seat provided by the embodiments of the present application. As shown in FIG. 7, in the embodiments, the detection result includes the body type related information; optionally, the body type related information includes race information and/or gender information; the method of the embodiments includes the following steps.

At step 710, the image of the riding person is input into a neural network used for attribute detection to perform attribute detection, to obtain an attribute detection result output by the neural network.

Optionally, in the embodiments of the present application, attribute detection is implemented by using the neural network; the attribute detection result includes the race information and/or gender information of the riding person; optionally, the neural network may be a classification network including at least a branch; under the condition of including one branch, the race information or gender information is classified; under the condition of including two branches, the race information and gender information are classified, so that the race classification and gender classification of the riding person are determined.

At step 720, the race information and/or gender information of the riding person corresponding to the image are obtained based on the attribute detection result.

At step 730, the adjustment information of the seat of the riding person is determined based on the body type related information.

The comfortable sitting posture of a body is not only related to the sitting posture height but also related to the body type. To provide more comfortable seat adjustment position, in the embodiments of the present application, the adjustment information of the seat is determined by obtaining the body type related information of the driver.

At step 740, the adjustment information is output or the seat is adjusted based on the adjustment information.

Optionally, the body types in different gender are greatly different; for the male and female with the same upper body height, due to a huge body type difference, corresponding comfortable seat positions are also greatly different. Therefore, to provide a more comfortable seat position, the gender information of the driver is required to be obtained. In addition to gender, the body types in different races are greatly different (e.g., yellow, white, and black races, etc.); for example, the black race is normally strong in body type, and requires more space in the front and back positions of the seat; for different races, seat position reference data suitable for the body type of each race can be obtained by using big data calculation.

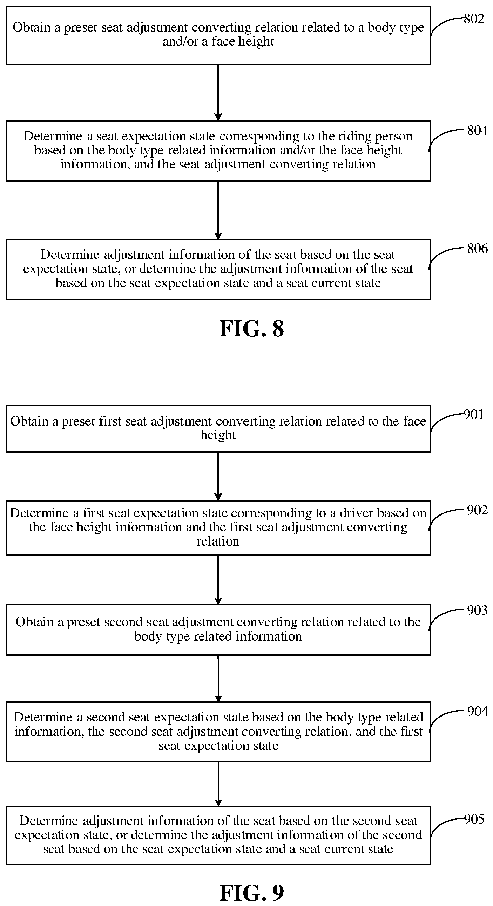

FIG. 8 is a further partial schematic flowchart of a method for intelligent adjustment of a vehicle seat provided by the embodiments of the present application. As shown in FIG. 8, step 130 in the foregoing embodiments may include the following steps.

At step 802, a preset seat adjustment converting relation related to a body type and/or a face height is obtained.

At step 804, a seat expectation state corresponding to the riding person is determined based on the body type related information and/or the face height information, and the seat adjustment converting relation.

Optionally, the seat adjustment converting relation may include, but not limited to the conversion formula or correspondence table, etc.; the conversion formula may input the body type and/or face height into the formula, to obtain the data corresponding to the seat expectation state; the correspondence table may directly obtain the data corresponding to the seat expectation state by using table searching based on the body type and/or face height; the correspondence table may obtained by using big data statistics or by using other modes; the embodiments of the present application do not limit the specific mode of the correspondence table.

At step 806, adjustment information of the seat is determined based on the seat expectation state, or the adjustment information of the seat is determined based on the seat expectation state and a seat current state.

Optionally, the adjustment information of the seat is determined directly based on the seat expectation state without considering the related information; specifically how to adjust the seat is implemented directly based on a motor without calculating the related state information; moreover, the adjustment information of the seat determined by using the seat expectation state and the seat current state is directly input into the motor for adjusting the seat state, and the adjustment can be implemented directly according to the information; the seat current state may be a seat may be a vehicle factory leaving position and may also be any other position (for example, the seat state set by the preceding driver, etc.); the current state of the seat can be known according to a seat setting history; the adjustment information of the seat can be obtained according to the current state of the seat.

In an optional example, for the determination of the seat state, different races and/or genders render different seat expectation states; multiple corresponding formulas can be obtained by combining different genders and races; for example, yellow race + male corresponds to a seat adjustment formula; specifically, the eyebrow center coordinate (x, y, z) input to each formula and each dimension of the back-rest adjustment angle both correspond to a cubic unitary function, for example:

$$x_{out} = a_1 x^3 + b_1 x^2 + c_1 x + d_1 \qquad \text{Formula (10)}$$

$$y_{out} = a_2 y^3 + b_2 y^2 + c_2 y + d_2 \qquad \text{Formula (11)}$$

$$z_{out} = a_3 z^3 + b_3 z^2 + c_3 z + d_3 \qquad \text{Formula (12)}$$

$$angle_{out} = a_4 x^3 + b_4 x^2 + c_4 x + d_4 \qquad \text{Formula (13)}$$

By using the aforementioned formulas (10), (11), (12), and (13), based on the coordinate of the eyebrow center coordinate in the x axis, y axis, and z axis, the seat expectation state ($x_{out}$, $y_{out}$, $z_{out}$, $angle_{out}$) obtained through the final calculation is determined to obtain the adjustment amounts of four motors through the final motor adjusting and distributing formula, where $x_{out}$ represents the front and back position information of the seat, $y_{out}$ represents the cushion inclined angle information, $z_{out}$ represents the upper and lower position information of the seat, and $angle_{out}$ represents the back-rest chair inclined angle information, where $a_1$, $b_1$, $c_1$, $d_1$, $a_2$, $b_2$, $c_2$, $d_2$, $a_3$, $b_3$, $c_3$, $d_3$, $a_4$, $b_4$, $c_4$, $d_4$ are constants obtained through multiple experiments.

In another optional example, the seat expectation state ($x_{out}$, $y_{out}$, $z_{out}$, $angle_{out}$) obtained by the final calculation can be determined only based on the coordinate (i.e., the eyebrow center height) of the eyebrow center coordinate in the z axis, and it can be implemented by the following formulas:

$$x_{out} = a_5 z + d_5 \qquad \text{Formula (14)}$$

$$y_{out} = a_6 z + d_6 \qquad \text{Formula (15)}$$

$$z_{out} = a_7 z + d_7 \qquad \text{Formula (16)}$$

$$angle_{out} = a_8 z + d_8 \qquad \text{Formula (17)}$$

where $x_{out}$ represents the front and back position information of the seat, $y_{out}$ represents the cushion inclined angle information, $z_{out}$ represents the upper and lower position information of the seat, and $angle_{out}$ represents the back-rest chair inclined angle information, where $a_5$, $d_5$, $a_6$, $d_6$, $a_7$, $d_7$, $a_8$, $d_8$ are constants obtained through multiple experiments.

FIG. 9 is another partial schematic flowchart of a method for intelligent adjustment of a vehicle seat provided by the embodiments of the present application. As shown in FIG. 9, step 130 in the foregoing embodiments may include the following steps.

At step 901, a preset first seat adjustment converting relation related to the face height is obtained.

Optionally, the seat adjustment converting relation may include, but not limited to the conversion formula or correspondence table, etc.; the conversion formula may input the face height into the formula, to obtain the data corresponding to the seat expectation state; the correspondence table may directly obtain the data corresponding to the seat expectation state by using table searching based on the face height; the correspondence table may obtained by using big data statistics or by using other modes; the embodiments of the present application do not limit the specific mode of the correspondence table.

At step 902, a first seat expectation state corresponding to a driver is determined based on the face height information and the first seat adjustment converting relation.

At step 903, a preset second seat adjustment converting relation related to the body type related information is obtained.

Optionally, in the embodiments, the body type related information corresponds to a second seat adjustment converting relation; the second seat adjustment converting relation is different from the first seat adjustment converting relation, and the mode thereof may include but not limited to the conversion formula or correspondence table; the second seat expectation state can be determined by combining the second seat adjustment converting relation, the body type related information, and the first seat expectation state.

At step 904, a second seat expectation state is determined based on the body type related information, the second seat adjustment converting relation, and the first seat expectation state.

At step 905, adjustment information of the seat is determined based on the second seat expectation state, or the adjustment information of the second seat is determined based on the seat expectation state and a seat current state.

In the embodiments, the adjustment information of the seat is determined by combining the body type related information and the face height information, where the classification number obtained by combining the race and gender in the body type related information is limited, and as long as one combination is determined, for example, male + yellow race, it is adapted for all riding persons in this classification, and the personalization is not enough, but information is easy to be obtained; moreover, the face height information is more personalized; the adjustment information corresponding to different riding persons may be different, and therefore, the embodiments implement improvement of the accuracy of the adjustment information determined by combining universal information and the personalized information.

In one or more optional embodiments, the method of the embodiments of the present application further includes: establishing and storing the mapping relationship between the seat adjustment information corresponding to the riding person and the identity information of the riding person.

In the embodiments of the present application, to save the repeat adjustments of the seat state for the same person, the mapping relationship between the seat adjustment information corresponding to the riding person and the identity information of the riding person is stored, and when the riding person rides again on the vehicle, the corresponding seat adjustment information can be obtained directly by using the mapping relationship based on the identity information of the riding person, so as to improving the efficiency of the intelligent vehicle seat adjustment.

In one or more optional embodiments, the seat adjustment information includes, but not limited to, at least one of the following information: a target value of a seat adjustment parameter, upward or downward adjustment amount of the seat, forward or backward adjustment amount of the seat, an adjustment amount of an inclined angle of a back-rest chair, and an adjustment amount of an inclined angel of a cushion.

Optionally, to implement a multidirectional adjustment seat, the seat is required to be adjusted in multiple directions; in addition to the commonly included upward or downward adjustment amount, forward or backward adjustment amount, and leftward or rightward adjustment amount, the adjustment amount of the inclined angle of the back-rest chair and the adjustment amount of the inclined angel of the cushion are further included. The adjustment information may be output adjustment amount, more normally, it may also be direct target adjustment state, for example, directly outputting the target value of each adjustment parameter such as upward or downward adjustment parameter, leftward or rightward adjustment parameter, and forward or backward adjustment parameter to be finally adjusted of the seat, while how to specifically adjust to achieve the target value, the motor or other devices may be used for processing and implementing.

Optionally, adjusting the seat based on the adjustment information of the seat includes at least one of the following operations:

adjusting the seat based on the target value of the seat adjustment parameter;
adjusting the seat in upper and lower directions based on the upward or downward adjustment amount of the seat;
adjusting the seat in front or back direction based on the forward or backward adjustment amount of the seat;
adjusting the inclined angle of a backrest of the seat based on the adjustment amount of the inclined angle of the back-rest chair; and
adjusting the inclined angle of the cushion of the seat based on the adjustment amount of the inclined angle of the cushion.

During the adjusting process, the adjustment amount can be transferred to an in-vehicle controller for the controller to control the motor or other devices of the seat; optionally, multiple motors may respectively adjust the seat in different directions, implementing the intelligent adjustment of the seat.

In one or more optional embodiments, the embodiments of the present application further include:

performing identity authentication based on the image; and
enabling the riding person to have a seat adjustment authority in response to the identity authentication being passed.

The embodiments of the present application perform identity authentication on the riding person; only the riding person passing the identity authentication can have the seat adjustment authority, which can improve the security of the vehicle; the person passing the identity authentication can be the person who has ridden in the vehicle or the person who has registered or stored information in advance; the process for identity authentication may be implemented based on the face feature matching or the authentication can be implemented by other modes; the embodiments of the present application do not limit the specific mode of the identity authentication.

Optionally, performing identity authentication based on the image includes:

performing face recognition based on the image to obtain a face feature of the riding person; and matching the face feature with at least one pre-stored face feature having an authority; and
enabling the riding person to have a seat adjustment authority in response to the identity authentication being passed includes:
enabling the riding person to have the seat adjustment authority in response to that the pre-stored face feature matched with the face feature exists and the identity authentication is passed.

The identity authentication is implemented through face feature matching in the embodiments; before matching, the face is subjected to face recognition; the face feature of the riding person can be obtained by using a convolutional neural network; the authentication process is matching the face feature with at least one pre-stored face feature; optionally, whether matching can be determined by determining the similarity (for example, the similarity between two features can be determined based on the distance between the two features) size between the face feature and the pre-stored face feature; optionally, when the similarity between the obtained face feature of the riding person and a certain per-stored face feature reaches a set threshold (the value of the threshold maybe set according to actual conditions), it indicates that the riding person and the pre-stored face feature relate to the same person; at this time, the riding person has the seat adjustment authority.

Optionally, the riding person is enabled to have a seat adjustment authority in response to the identity authentication being passed includes:

in response to the identity authentication being passed, determining whether the database includes the identity information of the riding person; the database storing the identity information of at least one riding person and the seat expectation state;
allowing the riding person to adjust the seat in response to the database not including the identity information of the riding person.

It may further include: invoking the stored seat expectation state to adjust the seat for the riding person in response to including the identity information of the riding person.

The database includes at least one pre-stored face feature and at least one seat position information; each pre-stored face feature corresponds to one seat position information.

In the vehicle of the embodiments, the database may be established for the riding person; the pre-stored face feature of the riding person and corresponding seat state information are stored in the database; when the riding person enters the vehicle, if it is recognized that the riding person has an existing pre-stored face feature in the database (the recognition process may be based on face matching, when determining the collected face feature is matched with the pre-stored face feature, it indicates that the driver has the known seat adjustment information); based on the matched pre-stored face feature, the corresponding seat state information is obtained, so as to implement the personalized adjustment seat of the riding person, where the information stored in the database requires to be set when the riding person rides in the vehicle for the first time; when one riding person enters the vehicle for the first time, i.e., the database does not have the pre-stored face feature matched with the face feature of the driver, the riding person is allowed to adjust the seat.

In one or more optional embodiments, before step 110, the method may further include:
collecting the image of the riding person by using at least one camera disposed inside the vehicle.

Optionally, the face image of the riding person is collected by using the camera disposed in front of the seat of the vehicle, and when collecting the face image by using the camera, the position of the camera is used as an origin point of the camera coordinate system; optionally, the camera includes, but not limited to, at least one of: an infrared camera, an RGB camera, a TOF camera, or a binocular camera; the embodiments of the present application do not limit specifically using which camera. Each camera has characteristics therefore, for example, when collecting the face image by using the IR camera or the double head camera, the supplementary lighting apparatus can be started when the light is insufficient, so that the photographed face image is clearer and easy to be recognized and processed.

Optionally, collecting the image of the riding person by using at least one camera disposed inside the vehicle includes:

collecting the image of the riding person by using at least one camera and a supplementary lighting apparatus disposed inside the vehicle.

In the embodiments of the present application, when collecting the image of the riding person, erroneous determination may be caused due to insufficient light in the vehicle, for example, erroneous determination of the race information due to insufficient light, etc.; to reduce the mistakes in collection and recognition, optionally while collecting the image by using the camera, adding the supplementary lighting apparatus improves the identifiability of the collected image; the supplementary lighting apparatus may be a supplementary lighting lamp, and other apparatuses.

A person of ordinary skill in the art may understand that all or some steps for implementing the foregoing method embodiments are achieved by a program by instructing related hardware; the foregoing program can be stored in a computer-readable storage medium; when the program is executed, steps including the foregoing method embodiments are executed. Moreover, the foregoing storage medium includes various media capable of storing program codes, such as a Read-Only Memory (ROM), a Random Access Memory (RAM), a magnetic disk, or an optical disk.

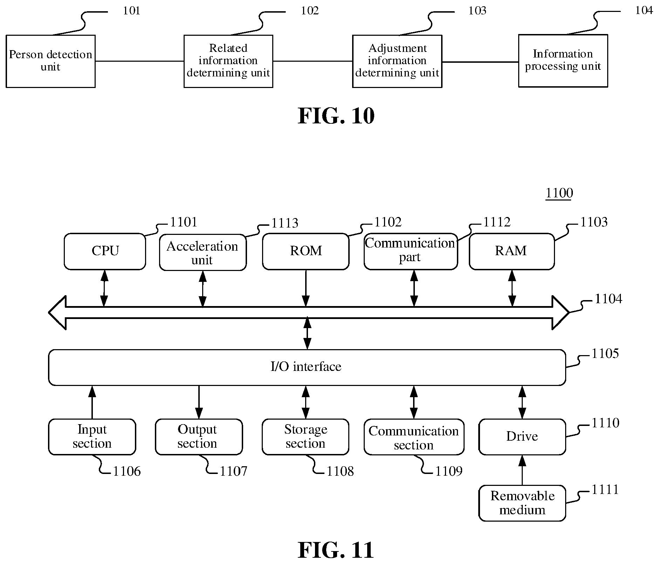

FIG. 10 is a schematic structure diagram of an apparatus for intelligent adjustment of a vehicle seat provided by the embodiments of the present application. The apparatus of the embodiment can be used for implementing the foregoing intelligent vehicle seat adjusting method embodiments of the present application. As shown in FIG. 10, the apparatus of the embodiments includes:

a person detection unit, configured to detect an image of a riding person of a vehicle, to obtain a detection result;
a related information determining unit 102, configured to determine body type related information and/or face height information of the riding person according to the detection result;
an adjustment information determining unit 103, configured to determine adjustment information of a seat of the riding person based on the body type related information and/or the face height information; and
an information processing unit 104, configured to output the adjustment information, or adjust the seat based on the adjustment information.

Based on the intelligent vehicle seat adjusting device provided by the aforementioned embodiments of the present application, the embodiments of the present application may implement targeted intelligent adjustment on the seat sit by the riding person of the vehicle based on an image detection technology, that is, the body type related information and/or face height information of the riding person are obtained through image detection, based on the body type related information and/or face height information, the adjustment information of the seat can be determined more accurately, a more suitable sitting posture is provided for the riding person by the seat adjusted according to the adjustment information of the seat, the use comfortable degree of the riding person is improved, and intelligent adjustment of the seat is implemented.

In one or more optional embodiments, the detection result includes the face reference point coordinate;
the person detection unit is configured to perform the face reference point detection on the image of the riding person, to obtain a face reference point coordinate of the riding person in a camera coordinate system; and

the related information determining unit is configured to, when determining the face height information of the riding person according to the detection result, convert the face reference point coordinate to a vehicle coordinate system from the camera coordinate system; and determine the face height information of the riding person based on the face reference point coordinate in the vehicle coordinate system.

In the embodiments of the present application, the seat adjustment information is determined according to the face height information for providing personalized seat adjustment information for different riding persons, which is more suitable for personal requirements of the riding persons and improves the comfortable degree for riding.

Optionally, the face reference point includes at least one face key point and/or at least one face other position point.

The related information determining unit is configured to, when performing face reference point detection on the image of the riding person, to obtain the face reference point coordinate of the riding person in a camera coordinate system, perform face reference point detection on the image of the riding person, to obtain at least one face key point coordinate of the riding person in the camera coordinate system; and/or determine the at least one face other position point based on the at least one face key point coordinate.

In one or more optional embodiments, the body type related information includes race information and/or gender information.

The person detection unit is configured to input the image of the riding person into a neural network used for attribute detection to perform attribute detection, to obtain an attribute detection result output by the neural network.

The related information determining unit is configured to, when determining body type related information of the riding person according to the detection result, obtain the race information and/or gender information of the riding person corresponding to the image based on the attribute detection result.

Optionally, the body types in different gender are greatly different; for the male and female with the same upper body height, due to a huge body type difference, corresponding comfortable seat positions are also greatly different. Therefore, to provide a more comfortable seat position, the gender information of the driver is required to be obtained. In addition to gender, the body types in different races are greatly different (e.g., yellow, white, and black races, etc.); for example, the black race is normally strong in body type, and requires more space in the front and back positions of the seat; for different races, seat position reference data suitable for the body type of each race can be obtained through big data calculation.

In one or more optional embodiments, the adjustment information determining unit is configured to obtain a preset seat adjustment converting relation related to a body type and/or a face height; determine a seat expectation state corresponding to the riding person based on the body type related information and/or the face height information, and the seat adjustment converting relation; and determine adjustment information of the seat based on the seat expectation state, or determine the adjustment information of the seat based on the seat expectation state and a seat current state.

Optionally, the adjustment information of the seat is determined directly based on the seat expectation state without considering the related information; specifically how to adjust the seat is implemented directly based on a motor without calculating the related state information; moreover, the adjustment information of the seat determined by using the seat expectation state and the seat current state is directly input into the motor for adjusting the seat state, and the adjustment can be implemented directly according to the information; the seat current state may be a seat may be a vehicle factory leaving position and may also be any other position (for example, the seat state set by the preceding driver, etc.); the current state of the seat can be known according to a seat setting history; the adjustment information of the seat can be obtained according to the current state of the seat.

In one or more optional embodiments, the adjustment information determining unit is configured to obtain a preset first seat adjustment converting relation related to the face height; determine a first seat expectation state corresponding to a driver based on the face height information and the first seat adjustment converting relation; obtain a preset second seat adjustment converting relation related to the body type related information; determine a second seat expectation state based on the body type related information, the second seat adjustment converting relation, and the first seat expectation state; and determine the adjustment information of the seat based on the second seat expectation state, or determine the adjustment information of the seat based on the second seat expectation state and the seat current state.

In the embodiments, the adjustment information of the seat is determined by combining the body type related information and the face height information, where the classification number obtained by combining the race and gender in the body type related information is limited, and as long as one combination is determined, for example, male + yellow race, it is adapted for all riding persons in this classification, and the personalization is not enough, but information is easy to be obtained; moreover, the face height information is more personalized; the adjustment information corresponding to different riding persons may be different, and therefore, the embodiments implement improvement of the accuracy of the adjustment information determined by combining universal information and the personalized information.

In one or more optional embodiments, the apparatus in the embodiments of the present application further includes:

a relation storage unit, configured to establish and store a mapping relationship between the seat adjustment information corresponding to the riding person and identity information of the riding person.

In the embodiments of the present application, to save the repeat adjustments of the seat state for the same person, the mapping relationship between the seat adjustment information corresponding to the riding person and the identity information of the riding person is stored, and when the riding person rides again on the vehicle, the corresponding seat adjustment information can be obtained directly through the mapping relationship based on the identity information of the riding person, so as to improving the efficiency of the intelligent vehicle seat adjustment.

In one or more optional embodiments, the seat adjustment information includes at least one of the following information: a target value of a seat adjustment parameter, upward or downward adjustment amount of the seat, forward or backward adjustment amount of the seat, leftward or rightward adjustment amount of the seat, an adjustment amount of an inclined angle of a back-rest chair, and an adjustment amount of an inclined angel of a cushion.

Optionally, to implement a multidirectional adjustment seat, the seat is required to be adjusted in multiple directions; in addition to the commonly included upward or downward adjustment amount, forward or backward adjustment amount, and leftward or rightward adjustment amount, the adjustment amount of the inclined angle of the back-rest chair and the adjustment amount of the inclined angel of the cushion are further included. The adjustment information may be output adjustment amount, more normally, it may also be direct target adjustment state, for example, directly outputting the target value of each adjustment parameter such as upward or downward adjustment parameter, leftward or rightward adjustment parameter, and forward or backward adjustment parameter to be finally adjusted of the seat, while how to specifically adjust to achieve the target value, the motor or other devices may be used for processing and implementing.

Optionally, when adjusting the seat based on the adjustment information of the seat, the information processing unit executes at least one of the following operations:

adjusting the seat based on the target value of the seat adjustment parameter;
adjusting the seat in upper or lower direction based on the upward or downward adjustment amount of the seat;
adjusting the seat in front or back direction based on the forward or backward adjustment amount of the seat;
adjusting the seat in left or right direction based on the leftward or rightward adjustment amount of the seat;
adjusting the inclined angle of a backrest of the seat based on the adjustment amount of the inclined angle of the back-rest chair; and
adjusting the inclined angle of the cushion of the seat based on the adjustment amount of the inclined angle of the cushion.

In one or more optional embodiments, the apparatus in the embodiments of the present application further includes:

an identity authentication unit, configured to perform identity authentication based on the image; and
an authority obtaining unit, configured to enable the riding person to have a seat adjustment authority in response to the identity authentication being passed.

The embodiments of the present application perform identity authentication on the riding person; only the riding person passing the identity authentication can have the seat adjustment authority, which can improve the security of the vehicle; the person passing the identity authentication can be the person who has ridden in the vehicle or the person who has registered or stored information in advance; the process for identity authentication may be implemented based on the face feature matching or the authentication can be implemented by other modes; the embodiments of the present application do not limit the specific mode of the identity authentication.

Optionally the identity authentication unit is configured to perform face recognition based on the image to obtain a face feature of the riding person; and match the face feature with at least one pre-stored face feature having an authority.

The authority obtaining unit is configured to enable the riding person to have the seat adjustment authority in response to that the pre-stored face feature matched with the face feature exists and the identity authentication is passed.

Optionally, the authority obtaining unit is configured to determine whether a database includes the identity information of the riding person in response to passing the identity authentication, where the database at least stores the identification information and seat expectation state of at least one riding person, the database includes at least one pre-stored face feature and at least one seat position information, and each pre-stored face feature corresponds to one seat position information; and allow the riding person to adjust the seat in response to the database not including the identity information of the riding person.

In one or more optional embodiments, the apparatus in the embodiments of the present application further includes:

an image collection unit, configured to collect the image of the riding person by using at least one camera disposed inside the vehicle.

Optionally, the face image of the riding person is collected by using the camera disposed in front of the seat of the vehicle, and when collecting the face image by using the camera, the position of the camera is used as an origin point of the camera coordinate system; optionally, the camera includes, but not limited to, at least one of: an infrared camera, an RGB camera, a TOF camera, or a binocular camera; the embodiments of the present application do not limit specifically using which camera. Each camera has characteristics therefore, for example, when collecting the face image by using the IR camera or the double head camera, the light supplementary device can be started when the light is insufficient, so that the photographed face image is clearer and easy to be recognized and processed.

Optionally, an image collection unit is configured to collect the image of the riding person by using at least one camera and a supplementary lighting apparatus disposed inside the vehicle.

For the working process, the setting mode, and corresponding technical effect of any embodiment of the apparatus for intelligent adjustment of a vehicle seat provided by the embodiments of the present disclosure, reference may be made to the specific descriptions of the corresponding method embodiment of the present disclosure, and details are not described herein again due to space limitation.

According to another aspect of the embodiments of the present application, a vehicle provided includes the apparatus for intelligent adjustment of a vehicle seat according to any one of the foregoing embodiments.

An electronic device provided according to further another aspect of the embodiments of the present application includes a processor, where the processor includes the apparatus for intelligent adjustment of a vehicle seat according to any one of the foregoing embodiments.

An electronic device provided according to yet another aspect of the embodiments of the present application includes: a memory, configured to store executable instructions; and

a processor, configured to communicate with the memory to execute the executable instructions so as to complete operations of the method for intelligent adjustment of a vehicle seat according to any one of the foregoing embodiments.

A computer readable storage medium provided according to another aspect of the embodiments of the present application is configured to store computer readable instructions, where the instructions, when being executed, enable to implement the operations of the method for intelligent adjustment of a vehicle seat according to any one of the foregoing embodiments.

In the embodiments of the present application, the neural networks are separately a multi-layer neural network (i.e., a deep neural network), such as a multi-layer convolutional neural network, for example, any neural network model such as LeNet, AlexNet, GoogLeNet, VGG, and ResNet. Neural networks of the same type and structure, or neural networks of different types and structures may be used for the various neural networks. The embodiments of the present application do not limit same.

The embodiments of the present application further provide an electronic device which, for example, may be a mobile terminal, a Personal Computer (PC), a tablet computer, a server, and the like. Referring to FIG. 11 below, a schematic structural diagram of an electronic device 1100, which may be a terminal device or a server, suitable for implementing the embodiments of the present application is shown. As shown in FIG. 11, the electronic device 1100 includes one or more processors, a communication part, and the like. The one or more processors are, for example, one or more Central Processing Units (CPUs) 1101 and/or one or more dedicated processors 1113; the dedicated processors 313 may be used as an acceleration unit 313, and may include, but not limited to, dedicated processors such as an image processor (GPU), FPGA, DSP, other ASIC chips, and the like; the processor may execute appropriate actions and processing according to executable instructions stored in a Read-Only Memory (ROM) 1102 or executable instructions loaded from a storage section 1108 to a Random Access Memory (RAM) 1103.The communication part 1112 may include, but is be limited to, a network card. The network card may include, but is not limited to, an Infiniband (IB) network card.

The processor may communicate with the ROM 1102 and/or the RAM 1103, to execute executable instructions. The processor is connected to the communication part 1112 via a bus 1104, and communicates with other target devices via the communication part 1112, thereby implementing corresponding operations in any of the methods provided by the embodiments of the present application. For example, the method includes: detecting an image of a riding person of a vehicle, to obtain a detection result; determining body type related information and/or face height information of the riding person according to the detection result; determining adjustment information of a seat of the riding person based on the body type related information and/or the face height information; and outputting the adjustment information, or adjusting the seat based on the adjustment information.

In addition, the RAM 1103 may further store various programs and data required for operations of an apparatus. CPU1101, ROM1102, and RAM1103 are connected to one another via the bus 1104. In the case that the RAM 1103 exists, the ROM 1102 is an optional module. The RAM 1103 stores executable instructions, or writes the executable instructions into the ROM 1102 during running, where the executable instructions cause the CPU 1101 to execute corresponding operations of the foregoing communication method. An Input/Output (I/O) interface 1105 is also connected to the bus 1104.The communication part 1112 is integrated, or is configured to have multiple sub-modules (for example, multiple IB network cards) connected to the bus.

The following components are connected to the I/O interface 1105: an input section 1106 including a keyboard, a mouse and the like; an output section 1107 including a Cathode-Ray Tube (CRT), a Liquid Crystal Display (LCD), a speaker and the like; the storage section 1108 including a hard disk drive and the like; and a communication section 1109 of a network interface card including an LAN card, a modem and the like. The communication section 1109 performs communication processing via a network such as the Internet. A drive 1110 is also connected to the I/O interface 1105 according to requirements. A removable medium 1111 such as a magnetic disk, an optical disk, a magneto-optical disk, a semiconductor memory or the like is mounted on the drive 1110 according to requirements, so that a computer program read from the removable medium is installed on the storage section 1108 according to requirements.

It should be explained that the framework as shown in FIG. 11 is only an optional implementing mode; in the specific practicing process, according to actual requirements, the number and type of the parts in FIG. 11 above may be selected, deleted, added, or replaced; for the setting of different functional parts, implementing modes such as separation settings or integration settings can also be used. For example, an acceleration unit 1113 and a CPU 1101 can be separately disposed or the acceleration unit 1113 can be integrated on the CPU 1101; the communication unit can be separately set or can also be integrally set on the COY 1101 or the acceleration unit 113, etc. These alternative implementations all fall within the scope of protection of the present application.

Particularly, the process described above with reference to the flowchart according to the embodiments of the present application may be implemented as a computer software program. For example, the embodiments of present application include a computer program product. The computer program product includes a computer program tangibly included in a machine-readable medium. The computer program includes a program code for performing a method shown in the flowchart. The program code may include instructions for correspondingly performing steps of the method provided in the embodiments of the present application. For example, the method includes: detecting an image of a riding person of a vehicle, to obtain a detection result; determining body type related information and/or face height information of the riding person according to the detection result; determining adjustment information of a seat of the riding person based on the body type related information and/or the face height information; and outputting the adjustment information, or adjusting the seat based on the adjustment information. In such embodiments, the computer program is downloaded and installed from the network through the communication section 1109, and/or is installed from the removable medium 1111. The computer program, when being executed by the CPU 1101, executes the operations of the foregoing functions defined in the methods of the present application.

The embodiments in the specification are all described in a progressive manner, for same or similar parts in the embodiments, refer to these embodiments, and each embodiment focuses on a difference from other embodiments. The system embodiments correspond to the method embodiments substantially and therefore are only described briefly, and for the associated part, refer to the descriptions of the method embodiments.

The methods and apparatuses in the present application may be implemented in many manners. For example, the methods and apparatuses in the present application may be implemented with software, hardware, firmware, or any combination of software, hardware, and firmware. The foregoing specific sequence of steps of the method is merely for description, and unless otherwise stated particularly, is not intended to limit the steps of the method in the present application. In addition, in some embodiments, the present application is also implemented as programs recorded in a recording medium. The programs include machine-readable instructions for implementing the methods according to the present application. Therefore, the present application further covers the recording medium storing the programs for performing the methods according to the present application.

The descriptions of the present application are provided for the purpose of examples and description, and are not intended to be exhaustive or limit the present application to the disclosed form. Many modifications and changes are obvious to a person of ordinary skill in the art. The embodiments are selected and described to better describe a principle and an actual application of the present application, and to make a person of ordinary skill in the art understand the present application, so as to design various embodiments with various modifications applicable to particular use.

**Claims**

1. A method for intelligent adjustment of a vehicle seat, comprising:

   detecting an image of a riding person of a vehicle, to obtain a detection result;
   determining body type related information and/or face height information of the riding person according to the detection result;
   determining adjustment information of a seat of the riding person based on the body type related information and/or the face height information; and
   outputting the adjustment information, or adjusting the seat based on the adjustment information.

2. The method according to claim 1, wherein the detection result comprises: a face reference point coordinate; detecting the image of the riding person of the vehicle, to obtain the detection result comprises:

   performing face reference point detection on the image of the riding person, to obtain the face reference point coordinate of the riding person in a camera coordinate system; and
   determining the face height information of the riding person according to the detection result comprises:

      converting the face reference point coordinate to a vehicle coordinate system from the camera coordinate system; and
      determining the face height information of the riding person based on the face reference point coordinate in the vehicle coordinate system.

3. The method according to claim 2, wherein the face reference point comprises at least one face key point and/or at least one face other position point; and
performing the face reference point detection on the image of the riding person, to obtain the face reference point coordinate of the riding person in the camera coordinate system comprises:

performing face reference point detection on the image of the riding person, to obtain at least one face key point coordinate of the riding person in the camera coordinate system; and/or
determining the at least one face other position point based on the at least one face key point coordinate.

4. The method according to any one of claims 1 to 3, wherein the body type related information comprises race information and/or gender information;
detecting the image of the riding person of the vehicle, to obtain the detection result comprises:

inputting the image of the riding person into a neural network used for attribute detection to perform attribute detection, to obtain an attribute detection result output by the neural network; and
determining the body type related information of the riding person according to the detection result comprises:
obtaining the race information and/or gender information of the riding person corresponding to the image based on the attribute detection result.

5. The method according to any one of claims 1 to 4, wherein determining adjustment information of the seat of the riding person based on the body type related information and/or the face height information comprises:

obtaining a preset seat adjustment converting relation related to a body type and/or a face height;
determining a seat expectation state corresponding to the riding person based on the body type related information and/or the face height information, and the seat adjustment converting relation; and
determining adjustment information of the seat based on the seat expectation state, or determining the adjustment information of the seat based on the seat expectation state and a seat current state.

6. The method according to any one of claims 1 to 4, wherein determining adjustment information of the seat of the riding person based on the body type related information and the face height information comprises:

obtaining a preset first seat adjustment converting relation related to the face height;
determining a first seat expectation state corresponding to a driver based on the face height information and the first seat adjustment converting relation;
obtaining a preset second seat adjustment converting relation related to the body type related information;
determining a second seat expectation state based on the body type related information, the second seat adjustment converting relation, and the first seat expectation state; and
determining the adjustment information of the seat based on the second seat expectation state, or determining the adjustment information of the seat based on the second seat expectation state and the seat current state.

7. The method according to claims 1 to 6, further comprising:
establishing a mapping relationship between the seat adjustment information corresponding to the riding person and identity information of the riding person and storing the mapping relationship.

8. The method according to any one of claims 1 to 7, wherein the seat adjustment information comprises at least one of the following information: a target value of a seat adjustment parameter, upward or downward adjustment amount of the seat, forward or backward adjustment amount of the seat, leftward or rightward adjustment amount of the seat, an adjustment amount of an inclined angle of a back-rest chair, or an adjustment amount of an inclined angel of a cushion.

9. The method according to claim 8, wherein adjusting the seat based on the seat adjustment information comprises at least one of the following operations:

adjusting the seat based on the target value of the seat adjustment parameter;
adjusting the seat in upper or lower direction based on the upward or downward adjustment amount of the seat;
adjusting the seat in front or back direction based on the forward or backward adjustment amount of the seat;
adjusting the seat in left or right direction based on the leftward or rightward adjustment amount of the seat;
adjusting the inclined angle of a backrest of the seat based on the adjustment amount of the inclined angle of the back-rest chair; or
adjusting the inclined angle of the cushion of the seat based on the adjustment amount of the inclined angle of the cushion.

10. The method according to any one of claims 1 to 9, wherein before detecting the image of the riding person, to obtain the detection result, the method further comprises:

performing identity authentication based on the image; and
enabling the riding person to have a seat adjustment authority in response to the identity authentication being passed.

11. The method according to claim 10, wherein

performing the identity authentication based on the image comprises: performing face recognition based on the image to obtain a face feature of the riding person; and, matching the face feature with at least one pre-stored face feature having the seat adjustment authority; and
enabling the riding person to have the seat adjustment authority in response to the identity authentication being passed comprises: enabling the riding person to have the seat adjustment authority in response to that the pre-stored face feature matched with the face feature exists and the identity authentication is passed.

12. The method according to claim 10 or 11, wherein enabling the riding person to have the seat adjustment authority in response to the identity authentication being passed comprises:

determining whether a database comprises the identity information of the riding person in response to the identity authentication being passed, wherein the database at least stores the identification information and seat expectation state of at least one riding person; the database comprises at least one pre-stored face feature and at least one seat position information; and each pre-stored face feature corresponds to one seat position information; and
allowing the riding person to adjust the seat in response to the database not including the identity information of the riding person.

13. The method according to any one of claims 1 to 12, wherein before detecting the image of the riding person of the vehicle, to obtain the detection result, the method further comprises:
collecting the image of the riding person by using at least one camera disposed inside the vehicle.

14. The method according to claim 13, wherein the camera comprises at least one of: an infrared camera, an RGB camera, a TOF camera, or a binocular camera.

15. The method according to claim 13 or 14, wherein collecting the image of the riding person by using the at least one camera disposed inside the vehicle comprises:
collecting the image of the riding person by using the at least one camera and a supplementary lighting apparatus disposed inside the vehicle.

16. An apparatus for intelligent adjustment of a vehicle seat, comprising:

a person detection unit, configured to detect an image of a riding person of a vehicle, to obtain a detection result;
a related information determining unit, configured to determine body type related information and/or face height information of the riding person according to the detection result;
an adjustment information determining unit, configured to determine adjustment information of a seat of the riding person based on the body type related information and/or the face height information; and
an information processing unit, configured to output the adjustment information, or adjust the seat based on the adjustment information.

17. The apparatus according to claim 16, wherein the detection result comprises: a face reference point coordinate;

the person detection unit is configured to perform the face reference point detection on the image of the riding person, to obtain a face reference point coordinate of the riding person in a camera coordinate system; and
the related information determining unit is configured to, when determining the face height information of the riding person according to the detection result, convert the face reference point coordinate to a vehicle coordinate system from the camera coordinate system; and determine the face height information of the riding person based on the face reference point coordinate in the vehicle coordinate system.

18. The apparatus according to claim 17, wherein the face reference point comprises at least one face key point and/or at least one face other position point; and
the related information determining unit is configured to, when performing face reference point detection on the image of the riding person, to obtain the face reference point coordinate of the riding person in a camera coordinate system, perform face reference point detection on the image of the riding person, to obtain at least one face key point coordinate of the riding person in the camera coordinate system; and/or determine the at least one face other position point based on the at least one face key point coordinate.

19. The apparatus according to any one of claims 16 to 18, wherein the body type related information comprises race information and/or gender information;

the person detection unit is configured to input the image of the riding person into a neural network used for attribute detection to perform attribute detection, to obtain an attribute detection result output by the neural network; and
the related information determining unit is configured to, when determining body type related information of the riding person according to the detection result, obtain the race information and/or gender information of the riding person corresponding to the image based on the attribute detection result.

20. The apparatus according to any one of claims 16 to 19, wherein the adjustment information determining unit is configured to obtain a preset seat adjustment converting relation related to a body type and/or a face height; determine a seat expectation state corresponding to the riding person based on the body type related information and/or the face height information, and the seat adjustment converting relation; and determine adjustment information of the seat based on the seat expectation state, or determine the adjustment information of the seat based on the seat expectation state and a seat current state.

21. The apparatus according to any one of claims 16 to 19, wherein the adjustment information determining unit is configured to obtain a preset first seat adjustment converting relation related to the face height; determine a first seat expectation state corresponding to a driver based on the face height information and the first seat adjustment converting relation; obtain a preset second seat adjustment converting relation related to the body type related information; determine a second seat expectation state based on the body type related information, the second seat adjustment converting relation, and the first seat expectation state; and determine the adjustment information of the seat based on the second seat expectation state, or determine the adjustment information of the seat based on the second seat expectation state and the seat current state.

22. The apparatus according to claims 16 to 21, further comprising:
a relation storage unit, configured to establish a mapping relationship between the seat adjustment information corresponding to the riding person and identity information of the riding person and store the mapping relationship.

23. The apparatus according to any one of claims 16 to 22, wherein the seat adjustment information comprises at least one of the following information: a target value of a seat adjustment parameter, upward or downward adjustment amount of the seat, forward or backward adjustment amount of the seat, leftward or rightward adjustment amounts of the seat, an adjustment amount of an inclined angle of a back-rest chair, or an adjustment amount of an inclined angel of a cushion.

24. The method according to claim 23, wherein the adjusting the seat based on the seat adjustment information comprises at least one of the following operations:

adjusting the seat based on the target value of the seat adjustment parameter;
adjusting the seat in upper or lower directions based on the upward or downward adjustment amounts of the seat;
adjusting the seat in front or back directions based on the forward or backward adjustment amounts of the seat;
adjusting the seat in left or right directions based on the leftward or rightward adjustment amounts of the seat;
adjusting the inclined angle of a backrest of the seat based on the adjustment amount of the inclined angle of the back-rest chair; or
adjusting the inclined angle of the cushion of the seat based on the adjustment amount of the inclined angle of the cushion.

25. The apparatus according to any one of claims 16 to 24, further comprising:

an identity authentication unit, configured to perform identity authentication based on the image; and
an authority obtaining unit, configured to enable the riding person to have a seat adjustment authority in response to the identity authentication being passed.

26. The apparatus according to claim 25, wherein the identity authentication unit is configured to perform face recognition based on the image to obtain a face feature of the riding person; and match the face feature with at least one pre-stored face feature having the seat adjustment authority; and
the authority obtaining unit is configured to enable the riding person to have the seat adjustment authority in response to that the pre-stored face feature matched with the face feature exists and the identity authentication is passed.

27. The apparatus according to claim 25 or 26,wherein the authority obtaining unit is configured to determine whether a database comprises the identity information of the riding person in response to the identity authentication being passed, wherein the database at least stores the identification information and seat expectation state of at least one riding person, the database comprises at least one pre-stored face feature and at least one seat position information, and each pre-stored face feature corresponds to one seat position information; and allow the riding person to adjust the seat in response to the database not including the identity information of the riding person.

28. The apparatus according to any one of claims 16 to 27, further comprising:
an image collection unit, configured to collect the image of the riding person by using at least one camera disposed inside the vehicle.

29. The apparatus according to claim 28, wherein the camera comprises at least one of: an infrared camera, an RGB camera, a TOF camera, or a binocular camera.

30. The apparatus according to claim 28 or 29, wherein the image collection unit is configured to collect the image of the riding person by using the at least one camera and a supplementary lighting apparatus disposed inside the vehicle.

31. A vehicle, comprising the apparatus for intelligent adjustment of a vehicle seat according to any one of claims 16 to 30.

32. An electronic device, comprising a processor, wherein the processor comprises the apparatus for intelligent adjustment of a vehicle seat according to any one of claims 16 to 76.

33. An electronic device, comprising: a memory, configured to store executable instructions; and
a processor, configured to communicate with the memory to execute the executable instructions so as to implement the method for intelligent adjustment of a vehicle seat according to any one of claims 1 to 15.

34. A computer storage medium, configured to store computer readable instructions, wherein the instructions, when being executed, enable to implement operations of the method for intelligent adjustment of a vehicle seat according to any one of claims 1 to 15.

35. A computer program product, comprising a computer-readable code, wherein the computer-readable code, when running in a device, enables a processor in the device to execute instructions for implementing the method for intelligent adjustment of a vehicle seat according to any one of claims 1 to 15.

Detect an image of a riding person of a vehicle, to obtain a detection result ⌐110

Determine body type related information and/or face height information of the riding person according to the detection result ⌐120

Determine adjustment information of a seat of the riding person based on the body type related information and/or the face height information ⌐130

Output the adjustment information or adjust the seat based on the adjustment information ⌐140

## FIG. 1

Perform face reference point detection on the image of the riding person, to obtain the face reference point coordinate of the riding person in a camera coordinate system ⌐210

Convert the face reference point coordinate to a vehicle coordinate system from the camera coordinate system ⌐220

Determine the face height information of the riding person based on the face reference point coordinate in the vehicle coordinate system ⌐230

Determine the adjustment information of the seat of the riding person based on the face height information ⌐240

Output the adjustment information or adjust the seat based on the adjustment information ⌐250

## FIG. 2

**FIG. 3**

**FIG. 4**

**FIG. 5**

FIG. 6

Input the image of the riding person into a neural network used for attribute detection to perform attribute detection, to obtain an attribute detection result output by the neural network ⌐710

Obtain the race information and/or gender information of the riding person corresponding to the image based on the attribute detection result ⌐720

Determine the adjustment information of the seat of the riding person based on the body type related information ⌐730

Output the adjustment information or adjust the seat based on the adjustment information ⌐740

FIG. 7

Obtain a preset seat adjustment converting relation related to a body type and/or a face height — 802

Determine a seat expectation state corresponding to the riding person based on the body type related information and/or the face height information, and the seat adjustment converting relation — 804

Determine adjustment information of the seat based on the seat expectation state, or determine the adjustment information of the seat based on the seat expectation state and a seat current state — 806

**FIG. 8**

Obtain a preset first seat adjustment converting relation related to the face height — 901

Determine a first seat expectation state corresponding to a driver based on the face height information and the first seat adjustment converting relation — 902

Obtain a preset second seat adjustment converting relation related to the body type related information — 903

Determine a second seat expectation state based on the body type related information, the second seat adjustment converting relation, and the first seat expectation state — 904

Determine adjustment information of the seat based on the second seat expectation state, or determine the adjustment information of the second seat based on the seat expectation state and a seat current state — 905

**FIG. 9**

101

102

103

104

| Person detection unit | | Related information determining unit | | Adjustment information determining unit | | Information processing unit |

**FIG. 10**

1100

1101  1113  1102  1112  1103

| CPU | Acceleration unit | ROM | Communication part | RAM |

1104

I/O interface 1105

| Input section | Output section | Storage section | Communication section | Drive | 1110 |

1106  1107  1108  1109

Removable medium 1111

**FIG. 11**

## INTERNATIONAL SEARCH REPORT

| International application No. |
| --- |
| **PCT/CN2019/111928** |

| A. CLASSIFICATION OF SUBJECT MATTER |
| --- |
| B60N 2/02(2006.01)i |
| According to International Patent Classification (IPC) or to both national classification and IPC |

| B. FIELDS SEARCHED |
| --- |
| Minimum documentation searched (classification system followed by classification symbols) |
| B60N2 |
| Documentation searched other than minimum documentation to the extent that such documents are included in the fields searched |
| Electronic data base consulted during the international search (name of data base and, where practicable, search terms used) |
| CNABS; VEN; DWPI; CNKI: 座椅, 调节, 调整, 图像, 摄像, 相机, 体型, 体形, 脸, 面部, 高度, 检测, seat, adjust+, image, camera, body, posture, physique, face, height,detect+, driver |

| C. DOCUMENTS CONSIDERED TO BE RELEVANT | | |
| --- | --- | --- |
| Category* | Citation of document, with indication, where appropriate, of the relevant passages | Relevant to claim No. |
| X | CN 108657029 A (SOUTH CHINA UNIVERSITY OF TECHNOLOGY) 16 October 2018 (2018-10-16) description, paragraphs 0046-0070, and figures 1-5 | 1-35 |
| X | CN 102963274 A (HANGZHOU BRANCH, ZHEJIANG GEELY AUTOMOBILE RESEARCH INSTITUTE CO., LTD. et al.) 13 March 2013 (2013-03-13) description, paragraphs 0034-0051, and figure 1 | 1-35 |
| X | CN 105109365 A (YULONG COMPUTER TELECOMMUNICATION SCIENTIFIC (SHENZHEN) CO., LTD.) 02 December 2015 (2015-12-02) description, paragraphs 0033-0069, and figures 1-4 | 1-35 |
| X | JP 2014201174 A (HONDA MOTOR CO., LTD.) 27 October 2014 (2014-10-27) description, paragraphs 0015-0040, and figures 1-6 | 1-35 |
| X | JP 0769107 A (MITSUBISHI MOTORS CORPORATION) 14 March 1995 (1995-03-14) description, paragraphs 0007-0022, and figures 1-9 | 1-35 |
| A | CN 106627261 A (GUANGZHOU UNIVERSITY) 10 May 2017 (2017-05-10) entire document | 1-35 |
| A | CN 106183901 A (DAIMLER A.G.) 07 December 2016 (2016-12-07) entire document | 1-35 |

☑ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 January 2020** | **23 January 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

EP 3 798 048 A1

**INTERNATIONAL SEARCH REPORT**

| International application No. |
|---|
| **PCT/CN2019/111928** |

**C.    DOCUMENTS CONSIDERED TO BE RELEVANT**

| Category* | Citation of document, with indication, where appropriate, of the relevant passages | Relevant to claim No. |
|---|---|---|
| A | JP 2006290074 A (NISSAN MOTOR) 26 October 2006 (2006-10-26)<br>entire document | 1-35 |
| A | JP 2005238968 A (TOYOTA MOTOR CORP.) 08 September 2005 (2005-09-08)<br>entire document | 1-35 |

Form PCT/ISA/210 (second sheet) (January 2015)

26

**INTERNATIONAL SEARCH REPORT**
**Information on patent family members**

International application No.

**PCT/CN2019/111928**

| Patent document cited in search report | | | Publication date (day/month/year) | Patent family member(s) | Publication date (day/month/year) |
|---|---|---|---|---|---|
| CN | 108657029 | A | 16 October 2018 | None | |
| CN | 102963274 | A | 13 March 2013 | None | |
| CN | 105109365 | A | 02 December 2015 | None | |
| JP | 2014201174 | A | 27 October 2014 | None | |
| JP | 0769107 | A | 14 March 1995 | None | |
| CN | 106627261 | A | 10 May 2017 | None | |
| CN | 106183901 | A | 07 December 2016 | None | |
| JP | 2006290074 | A | 26 October 2006 | None | |
| JP | 2005238968 | A | 08 September 2005 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811224906